# EUROPÄISCHE PATENTANMELDUNG

(11) **EP 3 892 864 A1**
(43) Veröffentlichungstag der Anmeldung: **13.10.2021**
(21) Anmeldenummer: 20169138.3
(22) Anmeldetag: 09.04.2020
(51) Int. Cl.: F04D 29/46, F04D 29/42, F04D 27/02, F04D 29/08

(54) **VERDICHTER**

(71) Anmelder: BMTS Technology GmbH & Co. KG, 70376 Stuttgart (DE); Swoboda Wiggensbach KG, 87487 Wiggensbach (DE)
(72) Erfinder: Gebhardt, Till, 70192 Stuttgart (DE); Hollmann, Christoph, 71642 Ludwigsburg (DE); Janisch, Werner, 88696 Owingen (DE); Küstermann, Stephan, 70376 Stuttgart (DE); Nibler, Simon, 73614 Schorndorf (DE); Wachter, Stefan, 87448 Waltenhofen (DE)
(74) Vertreter: BRP Renaud & Partner mbB Rechtsanwälte Patentanwälte Steuerberater

(57) **Zusammenfassung**

Die Erfindung betrifft einen Verdichter (1) zum Verdichten von Ladeluft für einen Verbrennungsmotor oder eine Brennstoffzelle. Der Verdichter (1) weist ein Verdichtergehäuse (2) auf, in dem ein von Ladeluft in Strömungsrichtung (SR) durchströmbarer Ladeluftdurchlass (5) des Verdichters (1) ausgebildet ist. Der Verdichter (1) weist zudem eine Verstellvorrichtung (6) mit einer in dem Ladeluftdurchlass (5) quer zur Strömungsrichtung (SR) angeordneten Verstelleinheit (7) und mit einem an dem Verdichtergehäuse (2) angeordneten Aktuator (8) auf. Der Aktuator (8) und die Verstelleinheit (7) wirken über eine Wirkstange (12) zusammen, die aus dem Aktuator (8) durch das Verdichtergehäuse (2) hindurch zu der Verstelleinheit (7) geführt ist. Der Aktuator (8) kann die Verstelleinheit (7) über die Wirkstange (12) in mehrere verschiedene Stellungen verstellen, in denen der durchströmbare Querschnitt des Ladeluftdurchlasses (5) unterschiedlich ist.

Erfindungsgemäß liegt ein Aktuatorgehäuse (14) des Aktuators (8) an dem Verdichtergehäuse (2) an und eine die Wirkstange (12) einfassende Dichtung (17) ist zwischen dem Aktuatorgehäuse (14) und dem Verdichtergehäuse (2) eingeklemmt.

## Beschreibung

Die Erfindung betrifft einen Verdichter zum Verdichten von Ladeluft für einen Verbrennungsmotor oder eine Brennstoffzelle nach dem Oberbegriff des Anspruchs 1.

Ein gattungsgemäßer Verdichter ist beispielweise aus EP 2 006 494 A1 und US 10 393 009 B2 bekannt. Der Verdichter umfasst dabei ein Verdichtergehäuse, das von einem Einlass zu einem Auslass von Luft durchströmbar ist. In dem Verdichtergehäuse ist ein Verdichterrad aufgenommen, das die strömende Luft verdichtet. Um den Kennfeldbereich des Verdichters über seine Pumpgrenze hinaus zu erweitern, kann eine Verstellvorrichtung eingesetzt werden. Die Verstellvorrichtung umfasst üblicherweise eine Verstelleinheit und einen Aktuator, die über mehrere Stangen miteinander zusammenwirken. Die Verstelleinheit ist dabei in dem Verdichtergehäuse aufgenommen und ändert den durchströmbaren Querschnitt des Verdichtergehäuses je nach ihrer Stellung. Dadurch können insbesondere die begrenzenden Effekte verringert oder vermieden werden. Der Aktuator ist an dem Verdichtergehäuse angeordnet oder in den Verdichter integriert und kann über mehrere Stangen die Verstelleinheit in die jeweilige Stellung aktiv verstellen. Die von dem Aktuator unmittelbar betätigbare Stange wird dabei von dem Aktuator durch einen Durchbruch in dem Verdichtergehäuse zu der Verstelleinheit geführt. Um eine Leckage aus dem Verdichtergehäuse nach außen zu verhindern, wird die Stange zu dem Verdichtergehäuse hin abgedichtet. Nachteiligerweise ist eine hier eingesetzte Dichtung einer dynamischen Beanspruchung ausgesetzt. Dadurch ist die Lebensdauer der Dichtung durch den dynamisch bedingten Verschleiß stark reduziert.

Die Aufgabe der Erfindung ist es daher, für einen Verdichter der gattungsgemäßen Art eine verbesserte oder zumindest alternative Ausführungsform anzugeben, bei der die beschriebenen Nachteile überwunden werden.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Ein Verdichter ist zum Verdichten von Ladeluft für einen Verbrennungsmotor oder eine Brennstoffzelle vorgesehen. Der Verdichter weist ein Verdichtergehäuse auf, in dem ein von Ladeluft in Strömungsrichtung durchströmbarer Ladeluftdurchlass ausgebildet ist. Der Verdichter weist eine Verstellvorrichtung mit einer Verstelleinheit und mit einem Aktuator auf. Die Verstelleinheit ist dabei in dem Ladeluftdurchlass quer zur Strömungsrichtung und der Aktuator ist an dem Verdichtergehäuse angeordnet. Der Verdichter weist zudem ein um eine Drehachse drehbares Verdichterrad auf, das in dem Verdichtergehäuse stromab des Ladeluftdurchlasses festgelegt ist. Die Drehachse des Verdichterrads fällt dabei mit der Strömungsrichtung der Ladeluft in dem Ladeluftdurchlass zusammen. Der Aktuator und die Verstelleinheit wirken dabei über eine Wirkstange der Verstellvorrichtung zusammen, die quer zur Strömungsrichtung aus dem Aktuator durch das Verdichtergehäuse hindurch zu der Verstelleinheit geführt ist. Der Aktuator kann dabei die Verstelleinheit über die Wirkstange in mehrere verschiedene Stellungen verstellen, in denen der durchströmbare Querschnitt des Ladeluftdurchlasses unterschiedlich ist. Erfindungsgemäß liegt ein Aktuatorgehäuse des Aktuators an dem Verdichtergehäuse an. Zudem ist eine die Wirkstange einfassende Dichtung zwischen dem Aktuatorgehäuse und dem Verdichtergehäuse eingeklemmt. Somit bildet die Verbindung von dem Aktuatorgehäuse und dem Verdichtergehäuse einen luftdichten Abschluss des durchströmbaren Ladeluftdurchlasses im Bereich des Durchtritts der Wirkstange nach außen. Vorteilhafterweise kann die Dichtung eine radiale oder axiale Ringdichtung oder eine Flachdichtung sein.

In dem erfindungsgemäßen Verdichter ist die Dichtung nicht im Bereich der Wirkstange - also nicht zwischen der Wirkstange und dem Verdichtergehäuse oder zwischen der Wirkstange und dem Aktuatorgehäuse - angeordnet, sondern zwischen dem Aktuatorgehäuse und dem Verdichtergehäuse eingeklemmt. Vorteilhafterweise kann die Dichtung die Wirkstange beabstandet umlaufen und ausschließlich mit dem Verdichtergehäuse und mit dem Aktuatorgehäuse im Kontakt stehen. Vorteilhafterweise kann die Dichtung eine statische Dichtung sein, die keinem dynamisch bedingten Verschleiß ausgesetzt ist. Die Dichtung wird weniger belastet und die Lebensdauer der Dichtung kann dadurch deutlich verlängert werden. Zudem kann das Abdichten des Verdichtergehäuses im Bereich der Wirkstange insgesamt verbessert werden.

Vorteilhafterweise kann vorgesehen sein, dass an dem Verdichtergehäuse ein Aufnahmebereich für den Aktuator integral ausgebildet ist, der den Aktuator um seine Längsmittelachse umlaufend und axial zumindest bereichsweise aufnimmt. Mit anderen Worten kann der Aktuator bereichsweise in dem Verdichtergehäuse angeordnet bzw. integriert sein. Der Aufnahmebereich kann den Aktuator zumindest bereichsweise vor äußeren Einflüssen und insbesondere vor Wärme schützen. Der Aufnahmebereich ist vorzugsweise in Form einer hohlzylindrischen Vertiefung in dem Verdichtergehäuse gebildet und weist einen kreisförmig berandeten und ebenen Boden und eine von diesem senkrecht abstehende zylindrische Innenwand auf. In dem derart ausgestalten Aufnahmebereich kann dann der Aktuator mit einem zylindrischen Aktuatorgehäuse aufgenommen werden.

Zusätzlich kann vorgesehen sein, dass der Aufnahmebereich mit dem Aktuator durch einen Schließdeckel verschlossen ist. Dabei kann der Schließdeckel den Aktuator zu dem Verdichtergehäuse hin anpressen und dadurch kann die Dichtung zwischen dem Aktuatorgehäuse und dem Boden des Aufnahmebereichs des Verdichtergehäuses eingeklemmt sein. Dazu kann ein Federelement - beispielweise eine Teller- oder Wellfeder - zwischen dem Aktuator und dem Schließdeckel angeordnet sein, um die nötige Vorspannung auf die Dichtung aufzubringen. Der Schließdeckel kann beispielsweise aus Blech gefertigt sein und an dem Verdichtergehäuse durch Umbördeln befestigt sein. Alternativ kann der Schließdeckel mit dem Aufnahmebereich verschraubt sein. Alternativ kann das Aktuatorgehäuse des Aktuators in den Aufnahmebereich eingeschraubt sein und dadurch die Dichtung zwischen dem Aktuatorgehäuse und dem Boden des Aufnahmebereichs des Verdichtergehäuses eingeklemmt sein.

Vorteilhafterweise kann vorgesehen sein, dass ein Aktuatorflansch des Aktuatorgehäuses des Aktuators an einem Verdichterflansch des Verdichtergehäuses anliegt. Der Aktuatorflansch kann dann mit dem Verdichterflansch verschraubt sein. Vorteilhafterweise kann der Verdichterflansch an dem Aufnahmebereich des Verdichtergehäuses ausgebildet sein. Der Aufnahmebereich ist dabei wie oben beschrieben ausgestaltet und der Aktuator ist bereichsweise in dem Aufnahmebereich des Verdichtergehäuses aufgenommen. Der Aktuatorflansch ist dann axial zur Mitte des Aktuatorgehäuses versetzt ausgebildet und liegt an dem Verdichterflansch an. Der Aktuatorflansch kann beispielweise mit dem Verdichterflansch verschraubt sein. Die Dichtung kann dabei zwischen dem Aktuatorflansch und dem Verdichterflansch eingeklemmt sein. Alternativ kann die Dichtung zwischen dem Aktuatorgehäuse und dem Boden des Aufnahmebereichs eingeklemmt sein.

Vorteilhafterweise kann vorgesehen sein, dass die Dichtung eine Ringdichtung ist, die in einer ringförmigen Nut des Aktuatorgehäuses aufgenommen und dadurch in das Aktuatorgehäuse integriert bzw. in der Nut in dem Aktuatorgehäuse vormontiert ist. Bei der Montage des Aktuators an dem Verdichtergehäuse ist dann die Dichtung gleichzeitigt mit dem Aktuator montierbar. Alternativ kann die Dichtung eine Ringdichtung sein, die in einer ringförmigen Nut oder einer ringförmigen Fase des Verdichtergehäuses aufgenommen ist. Die Ringdichtung kann vorteilhafterweise in das Verdichtergehäuse integriert bzw. in der Nut des Verdichtergehäuses vormontiert sein. Bei der Montage des Aktuators an dem Verdichtergehäuse ist dann die Dichtung bereits vormontiert. Auf diese vorteilhafte Weise ist kein zusätzliches Dichtelement notwendig bzw. braucht es nicht separat montiert zu werden. Ist die Dichtung zwischen dem Aktuatorflansch und dem Verdichterflansch wie oben beschrieben eingeklemmt, so kann die Ringdichtung alternativ in das Aktuatorgehäuse integriert sein. So kann die Ringdichtung vor der Montage um das Aktuatorgehäuse angeordnet sein und durch eigene Spannkraft an dem Aktuatorgehäuse halten. Bei der Montage des Aktuators an dem Verdichtergehäuse kann dann die Ringdichtung in der für sie vorgesehenen Fase in dem Verdichterflansch angeordnet und zwischen dem Aktuatorflansch und dem Verdichterflansch eingeklemmt sein. Bei dieser Lösung dichtet die Ringdichtung sowohl axial als auch radial.

Bei einer weiteren vorteilhaften Ausgestaltung des Verdichters ist vorgesehen, dass eine Lagerstelle der Wirkstange in dem Verdichtergehäuse angeordnet ist. Dadurch kann der Aktuator bauraumsparend an dem Verdichtergehäuse angeordnet werden. Ferner kann ein Verkippen der Wirkstange verhindert werden. Vorteilhafterweise kann vorgesehen sein, dass eine Lagerstelle der Wirkstange und der Aktuator um seine Längsmittelachse umlaufend und axial zumindest bereichsweise in dem Verdichtergehäuse aufgenommen sind.

Vorteilhafterweise kann vorgesehen sein, dass der Aktuator ein linearer Steller ist und die Wirkstange entlang der Längsmittelachse des Aktuators translatorisch bewegbar ist. Die Wirkstange ist dann tangential zu der Verstelleinheit und quer zur Strömungsrichtung ausgerichtet und wirkt über eine Koppelstange der Verstellvorrichtung mit der Verstelleinheit zusammen. Alternativ kann vorgesehen sein, dass der Aktuator ein rotatorischer Steller ist und die Wirkstange mittels des Aktuators drehbar ist. Die Wirkstange ist dann quer zur Strömungsrichtung ausgerichtet und wirkt über eine Koppelstange der Verstellvorrichtung mit der Verstelleinheit zusammen. Zusätzlich kann vorgesehen sein, dass die Wirkstange und die Koppelstange unter einem Winkel gleich 90° zueinander ausgerichtet sind. Zusätzlich kann vorgesehen sein, dass die Wirkstange und die Koppelstange miteinander verschraubt sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittansicht eines erfindungsgemäßen Verdichters in einer ersten Ausführungsform;
- Fig. 2: eine Schnittansicht des erfindungsgemäßen Verdichters in einer zweiten Ausführungsform;
- Fig. 3: eine Schnittansicht des erfindungsgemäßen Verdichters in einer dritten Ausführungsform;
- Fig. 4 und 5: eine Teilansicht und eine Schnittansicht des erfindungsgemäßen Verdichters in einer vierten Ausführungsform;
- Fig. 6: eine teilweise Schnittansicht des erfindungsgemäßen Verdichters in der ersten Ausführungsform mit einer abweichend angeordneten Dichtung;
- Fig. 7 bis 9: Schnittansichten des erfindungsgemäßen Verdichters in einer fünften Ausführungsform mit abweichend angeordneten Dichtungen.

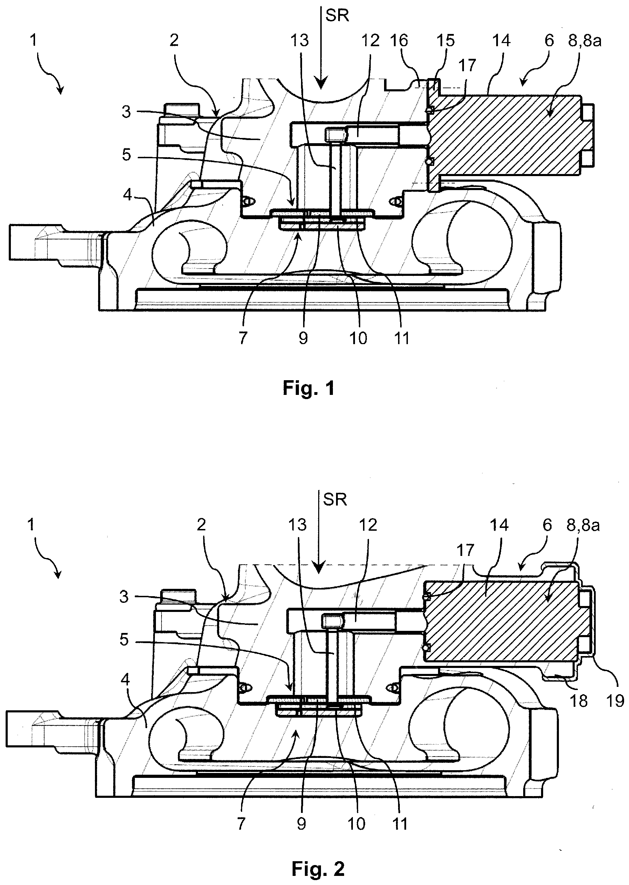

Fig. 1 zeigt eine Schnittansicht eines erfindungsgemäßen Verdichters 1 in einer ersten Ausführungsform. Der Verdichter weist ein Verdichtergehäuse 2 auf, das einen Einlassstutzen 3 und eine Spirale 4 mit einem Verdichterrad - hier nicht gezeigt - umfasst. Zwischen dem Einlassstutzen 3 und der Spirale 4 ist ein Ladeluftdurchlass 5 gebildet, der von Ladeluft in Strömungsrichtung SR von dem Einlassstutzen 3 zu dem Verdichterrad durchströmbar ist. Der Verdichter 1 weist ferner eine Verstellvorrichtung 6 mit einer Verstelleinheit 7 und mit einem Aktuator 8 auf. Die Verstelleinheit 7 ist in dem Ladeluftdurchlass 5 quer zur Strömungsrichtung SR angeordnet und kann von dem Aktuator 8 aktiv in eine der mehreren Stellungen verstellt werden. In diesem Ausführungsbeispiel ist die Verstelleinheit 7 durch einen Verstellring 9, einen Lagerring 10 und mehrere dazwischen gelagerte Blendenelemente 11 gebildet. Wird der Verstellring 9 an dem Lagerring 10 verdreht, so können die Blendenelemente 11 radial nach innen ausfahren und radial nach außen einfahren und dadurch kann der durchströmbare Querschnitt des Ladeluftdurchlasses 5 geändert werden. Grundsätzlich sind jedoch auch andere Ausführungsformen der Verstelleinheit 7 denkbar.

In der ersten Ausführungsform des Verdichters 1 ist der Aktuator 8 ein linearer Steller 8a, der mit der Verstelleinheit 7 über eine Wirkstange 12 und eine Koppelstange 13 zusammenwirkt. Die Wirkstange 12 ist dabei endseitig in dem Aktuator 8 aufgenommen und ist aus dem Aktuator 8 durch einen Durchtritt 20 des Verdichtergehäuses 2 hindurch zu der Koppelstange 13 geführt. Die Wirkstange 12 und die Koppelstange 13 sind dabei senkrecht zueinander ausgerichtet. Der Steller 8a verstellt dabei die Wirkstange 12 translatorisch quer zur Strömungsrichtung SR. Die Koppelstange 13 ist mit der Wirkstange 12 wirkend verbunden - beispielweise mit der Wirkstange 12 verschraubt oder in die Wirkstange 12 eingeschraubt - und wird mitverstellt, wodurch auch der mit der Koppelstange 13 wirkend verbundene Verstellring 9 relativ zu dem Lagerring 10 verdreht wird. Als Folge werden die Blendenelemente 11 der Verstelleinheit 7 radial ausgefahren oder eingefahren und dadurch der durchströmbare Querschnitt des Ladeluftdurchlasses 5 geändert.

In der ersten Ausführungsform des Verdichters 1 weist der Aktuator 8 ein Aktuatorgehäuse 14 mit einem Aktuatorflansch 15 auf, der an einem Verdichterflansch 16 des Verdichtergehäuses 2 anliegt und mit diesem verschraubt bzw. mittels Schrauben an dem Verdichterflansch 16 des Verdichtergehäuses 2 angeschraubt ist. Eine Lagerstelle der Wirkstange 12 ist dabei innerhalb des Verdichtergehäuses 2 angeordnet. Dadurch ist der Aktuator 8 besonders kompakt an dem Verdichtergehäuse 2 angeordnet und ein Verkippen der Wirkstange 12 kann verhindert werden. Zwischen dem Aktuatorflansch 15 bzw. dem Aktuatorgehäuse 14 und dem Verdichterflansch 16 bzw. dem Verdichtergehäuse 2 ist eine Dichtung 17 eingeklemmt, die das Verdichtergehäuse 2 im Bereich der Wirkstange 12 nach außen abdichtet. Die Dichtung 17 ist hier eine O-Ringdichtung, die in einer ringförmigen Nut des Aktuatorflanschs 15 aufgenommen und dadurch in das Aktuatorgehäuse 14 integriert ist. Mit anderen Worten ist die Dichtung 17 hier ein Bestandteil des Aktuators 8. Die Dichtung 17 fasst dabei die Wirkstange 12 ein bzw. umläuft die Wirkstange 12 beabstandet und weist keinen Kontakt mit der Wirkstange 12 auf. Dadurch ist die Dichtung 17 eine statische Dichtung, die keiner dynamischen Belastung und dadurch keinem dynamisch bedingten Verschleiß ausgesetzt ist.

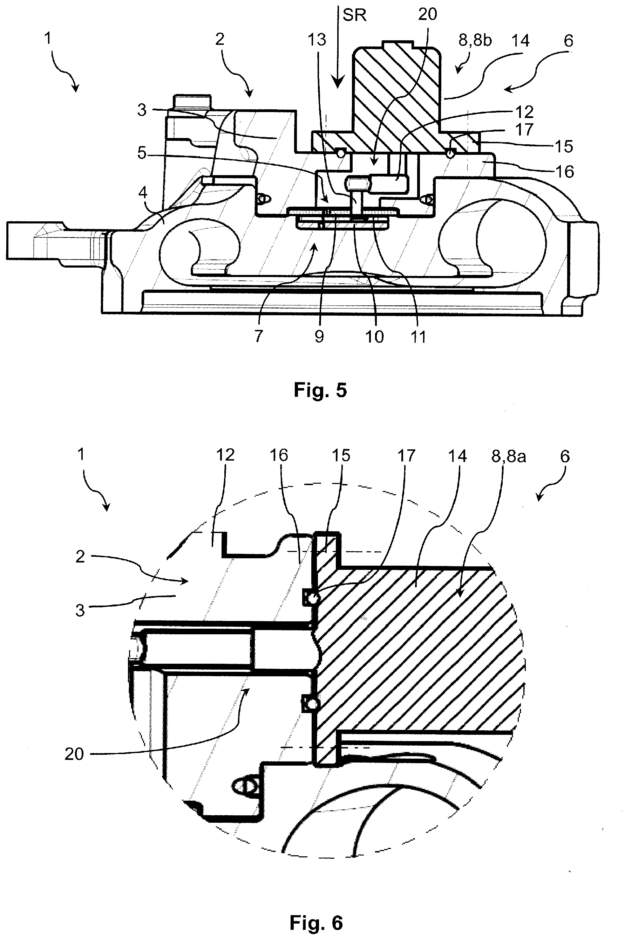

Fig. 6 zeigt eine teilweise Schnittansicht des Verdichters 1 in der ersten Ausführungsform. Abweichend zu dem Verdichter 1 in Fig. 1 ist hier die Dichtung 17 in einer ringförmigen Nut des Verdichterflanschs 16 aufgenommen und dadurch in das Verdichtergehäuse 2 integriert. Mit anderen Worten ist die Dichtung 17 hier ein Bestandteil des Verdichtergehäuses 2.

Fig. 2 zeigt eine Schnittansicht des erfindungsgemäßen Verdichters 1 in einer zweiten Ausführungsform. Im Unterschied zu der ersten Ausführungsform, ist hier der Aktuator 8 in einem Aufnahmebereich 18 des Verdichtergehäuses 2 aufgenommen. Der Aufnahmebereich 18 ist integral an dem Verdichtergehäuse 2 ausgebildet und ummantelt dem Aktuator 8. Der Aufnahmebereich 18 ist mit einem Schließdeckel 19 aus Blech verschlossen, der an dem Aufnahmebereich 18 durch Umbördeln befestigt ist. Der Schließdeckel 19 presst dabei den Aktuator 8 bzw. das Aktuatorgehäuse 14 an das Verdichtergehäuse 2 an, so dass die Dichtung 17 zwischen dem Aktuatorgehäuse 14 und dem Verdichtergehäuse 2 eingeklemmt ist. Die Dichtung 17 ist hier eine O-Ringdichtung, die in einer ringförmigen Nut des Aktuatorgehäuses 14 aufgenommen und dadurch in das Aktuatorgehäuse 14 integriert ist. Im Übrigen stimmen die erste Ausführungsform und die zweite Ausführungsform des Verdichters 1 überein.

In Fig.1 und Fig. 2 ist der lineare Steller 8a gezeigt. Es versteht sich jedoch, dass diese Ausführungsformen sich auf gleiche Weise für einen rotatorischen Steller eignen.

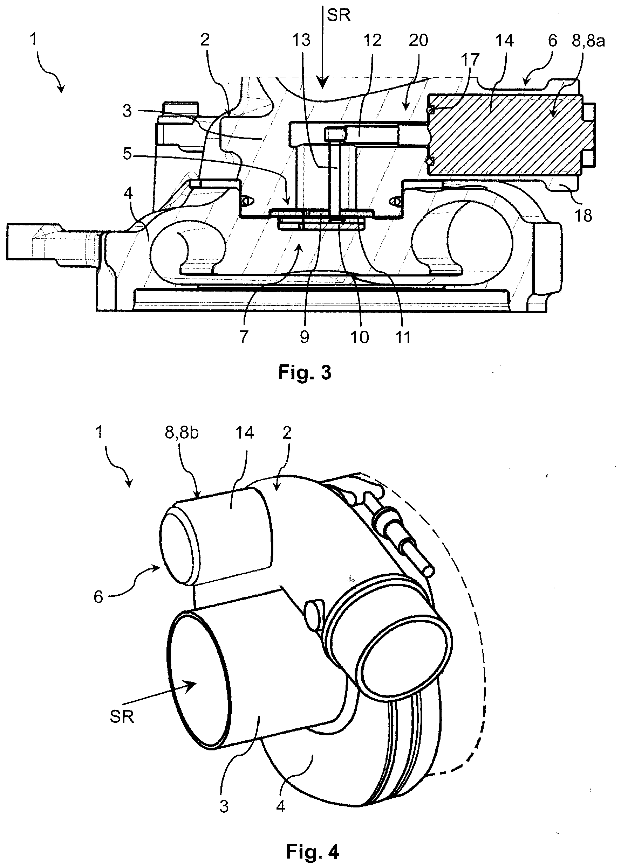

Fig. 3 zeigt eine Schnittansicht des erfindungsgemäßen Verdichters 1 in einer dritten Ausführungsform. Im Unterschied zu der zweiten Ausführungsform ist hier das Aktuatorgehäuse 14 in den Aufnahmebereich 18 des Verdichtergehäuses 2 eingeschraubt. Dazu weist das Aktuatorgehäuse 14 ein Außengewinde und der Aufnahmebereich 18 ein Innengewinde auf. Das Außengewinde ist in einem Teilbereich einer zylindrischen Außenwand des Aktuatorgehäuse 14 und das Innengewinde ist in einem Teilbereich einer zylindrischen Innenwand des Aufnahmebereichs 18 ausgebildet. Bei der Montage des Aktuators 8 wird das Außengewinde in das Innengewinde eingeschraubt, bis zwischen dem Aktuator 8 und dem Verdichtergehäuse 2 eine ausreichende Kraft zum Einklemmen der Dichtung 17 und zum luftdichten Abschluss des durchströmbaren Ladeluftdurchlasses 5 im Bereich des Durchtritts 20 bewirkt ist. Im Übrigen stimmen die zweite Ausführungsform und die dritte Ausführungsform des Verdichters 1 überein.

Fig. 4 zeigt eine Teilansicht und Fig. 5 zeigt eine Schnittansicht des erfindungsgemäßen Verdichters 1 in einer vierten Ausführungsform. Im Unterschied zu den anderen Ausführungsformen des Verdichters 1 ist hier der Aktuator 8 ein rotatorischer Steller 8b. Die Wirkstange 12 wird also durch den Steller 8b in Rotation versetzt und dadurch die Koppelstange 13 und entsprechend der Verstellring 9 verstellt. Die Wirkstange 12 und Koppelstange 13 sind hier vorteilhafterweise senkrecht zueinander ausgerichtet. Auch hier ist zwischen dem Aktuatorgehäuse 14 und dem Verdichtergehäuse 2 eine statische Dichtung 17 eingeklemmt, die das Verdichtergehäuse 2 nach außen abdichtet. Durch den rotatorischen Steller 8b kann der Verdichter 1 in radialer Richtung kompakter ausgeführt sein, da der rotatorische Steller 8b bzw. seine Längsmittelachse - wie in Fig. 4 und Fig. 5 gezeigt ist - parallel zur Strömungsrichtung SR bzw. parallel zu einer Drehachse eines Verdichterrads des Verdichters 1 angeordnet sein kann. Der dementsprechend eingesparte Bauraum kann dann teilweise zur Ausbildung des Verdichterflansches 16 des Verdichters 1 genutzt werden. Die Dichtung 17 ist hier eine O-Ringdichtung, die in einer ringförmigen Nut des Aktuatorflanschs 15 aufgenommen und dadurch in das Aktuatorgehäuse 14 integriert ist.

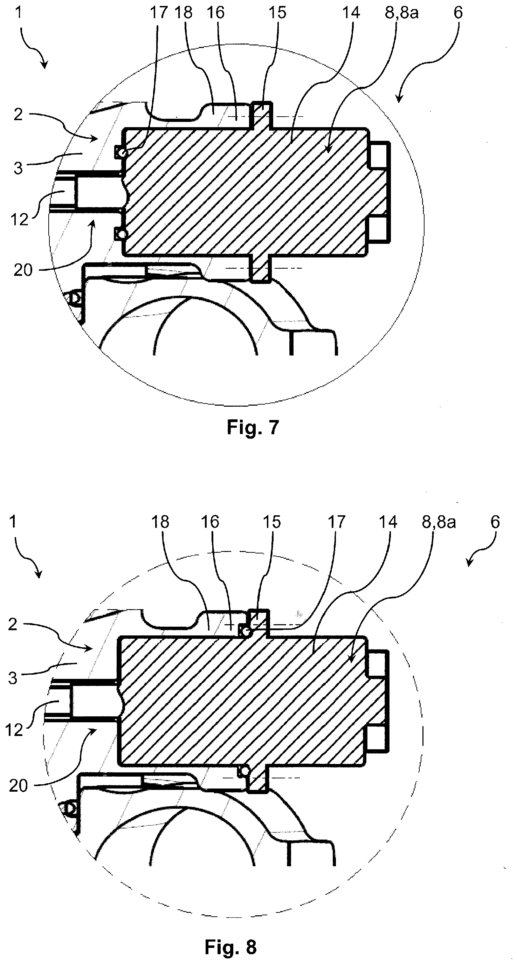

Fig. 7, Fig. 8 und Fig. 9 zeigen Schnittansichten des erfindungsgemäßen Verdichters 1 in einer fünften Ausführungsform. Hier weist der Verdichter 1 den Aufnahmebereich 18 auf, der den Aktuator 8 axial bereichsweise aufnimmt. Der Verdichterflansch 16 ist an dem Aufnahmebereich 18 und der Aktuatorflansch 15 ist etwa mittig an dem Aktuatorgehäuse 14 ausgebildet. Der Aktuatorflansch 15 liegt dabei an dem Verdichterflansch 16 an und ist mit diesem verschraubt.

In Fig. 7 ist die Dichtung 17 innerhalb des Aufnahmebereichs 18 angeordnet und zwischen dem Aktuatorgehäuse 14 und dem Verdichtergehäuse 2 eingeklemmt. Die Dichtung 17 ist hier eine O-Ringdichtung, die in einer ringförmigen Nut des Verdichtergehäuses 2 innerhalb des Aufnahmebereichs 18 bzw. an einem Boden des Aufnahmebereichs 18 aufgenommen und dadurch in das Verdichtergehäuse 2 integriert ist.

In Fig. 8 ist die Dichtung 17 zwischen dem Aktuatorflansch 15 und dem Verdichterflansch 16 eingeklemmt. Die Dichtung 17 ist auch hier eine O-Ringdichtung, die jedoch in einer ringförmigen Nut zwischen Verdichterflansch 16 und Aufnahmebereich 18 aufgenommen ist. Die Dichtung 17 kann dabei in das Aktuatorgehäuse 14 integriert bzw. an diesem festgelegt sein, indem die Dichtung 17 an dem Aktuatorgehäuse 14 vorgespannt, insbesondere radial vorgespannt, ist. Bei der Montage des Aktuators 8 an dem Verdichtergehäuse 2 kann dann die Dichtung 17 in der vorgesehenen Nut an dem Verdichterflansch 16 angeordnet und zwischen dem Aktuatorflansch 15 und dem Verdichterflansch 16 eingeklemmt sein. Die Nut kann dabei direkt an einem Übergang zwischen dem Verdichterflansch 16 und dem Aufnahmebereich 18 angeordnet sein und dadurch radial zu dem Aktuatorgehäuse 14 hin und axial zu dem Aktuatorflansch 15 offen sein. Auf diese Weise kann die Dichtung 17 hier axial und radial abdichten.

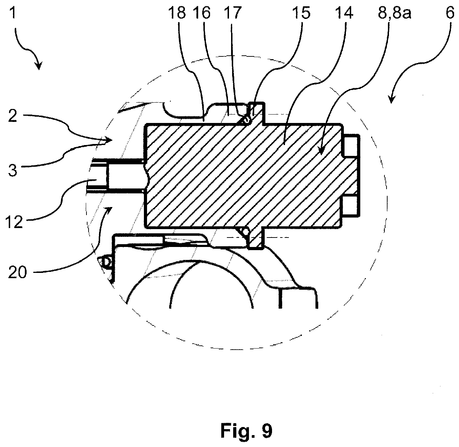

In Fig. 9 ist die Dichtung 17 zwischen dem Aktuatorflansch 15 und dem Verdichterflansch 16 eingeklemmt. Die Dichtung 17 ist auch hier eine O-Ringdichtung, die jedoch in einer ringförmigen Fase des Verdichterflanschs 16 aufgenommen ist. Die Dichtung 17 kann dabei in das Aktuatorgehäuse 14 integriert bzw. an diesem festgelegt sein, indem die Dichtung 17 an dem Aktuatorgehäuse 14 vorgespannt ist. Insbesondere kann die Dichtung 17 so an dem Aktuatorgehäuse 14 festgelegt sein, dass sie radial an dem Aktuatorgehäuse 14 und gleichzeitig axial an dem Aktuatorflansch 15 anliegt. Bei der Montage des Aktuators 8 an dem Verdichtergehäuse 2 kann dann die Dichtung 17 in der vorgesehenen Fase an dem Verdichterflansch 16 angeordnet und zwischen dem Aktuatorflansch 15 und dem Verdichterflansch 16 eingeklemmt sein. Die Dichtung 17 dichtet hier axial und radial ab.

## Patentansprüche

1. Verdichter (1) zum Verdichten von Ladeluft für einen Verbrennungsmotor oder eine Brennstoffzelle,
- wobei der Verdichter (1) ein Verdichtergehäuse (2) aufweist, in dem ein von Ladeluft in Strömungsrichtung (SR) durchströmbarer Ladeluftdurchlass (5) des Verdichters (1) ausgebildet ist,
- wobei der Verdichter (1) eine Verstellvorrichtung (6) mit einer in dem Ladeluftdurchlass (5) quer zur Strömungsrichtung (SR) angeordneten Verstelleinheit (7) und mit einem an dem Verdichtergehäuse (2) angeordneten Aktuator (8) aufweist,
- wobei der Aktuator (8) und die Verstelleinheit (7) über eine Wirkstange (12) der Verstellvorrichtung (6) zusammenwirken, die aus dem Aktuator (8) durch das Verdichtergehäuse (2) hindurch zu der Verstelleinheit (7) geführt ist, und
- wobei der Aktuator (8) die Verstelleinheit (7) über die Wirkstange (12) in mehrere verschiedene Stellungen verstellen kann, in denen der durchströmbare Querschnitt des Ladeluftdurchlasses (5) unterschiedlich ist,
**dadurch gekennzeichnet,**
**dass** ein Aktuatorgehäuse (14) des Aktuators (8) an dem Verdichtergehäuse (2) anliegt und dass eine die Wirkstange (12) einfassende Dichtung(17) zwischen dem Aktuatorgehäuse (14) und dem Verdichtergehäuse (2) eingeklemmt ist.

2. Verdichter nach Anspruch 1,
**dadurch gekennzeichnet,**
**dass** die Dichtung (17) eine statische Dichtung ist und keinem dynamisch bedingten Verschleiß ausgesetzt ist.

3. Verdichter nach Anspruch 1 oder 2,
**dadurch gekennzeichnet,**
**dass** die Dichtung (17) die Wirkstange (12) beabstandet umläuft und ausschließlich mit dem Verdichtergehäuse (2) und mit dem Aktuatorgehäuse (14) im Kontakt steht.

4. Verdichter nach einem der Ansprüche 1 bis 3,
**dadurch gekennzeichnet,**
**dass** an dem Verdichtergehäuse (2) ein Aufnahmebereich (18) für den Aktuator (8) integral ausgebildet ist, der den Aktuator (8) um seine Längsmittelachse umlaufend und axial zumindest bereichsweise aufnimmt.

5. Verdichter nach Anspruch 4,
**dadurch gekennzeichnet,**
- **dass** der Aufnahmebereich (18) mit dem Aktuator (8) durch einen Schließdeckel (19) verschlossen ist, wobei der Schließdeckel (19) den Aktuator (8) zu dem Verdichtergehäuse (2) hin anpresst und dadurch die Dichtung (17) zwischen dem Aktuatorgehäuse (14) und dem Verdichtergehäuse (2) eingeklemmt ist, oder
- **dass** das Aktuatorgehäuse (14) des Aktuators (8) in den Aufnahmebereich (18) eingeschraubt ist und dadurch die Dichtung (17) zwischen dem Aktuatorgehäuse (14) und dem Verdichtergehäuse (2) eingeklemmt ist.

6. Verdichter nach einem der Ansprüche 1 bis 4,
**dadurch gekennzeichnet,**
**dass** ein Aktuatorflansch (15) des Aktuatorgehäuses (14) des Aktuators (8) an einem Verdichterflansch (16) des Verdichtergehäuses (2) anliegt und mit dem Verdichterflansch (16) verschraubt ist.

7. Verdichter nach Anspruch 4 und 6,
**dadurch gekennzeichnet,**
**dass** der Verdichterflansch (16) an dem Aufnahmebereich (18) des Verdichtergehäuses (2) ausgebildet ist und der Aktuator (8) bereichsweise in dem Aufnahmebereich (18) des Verdichtergehäuses (2) aufgenommen ist, wobei die Dichtung (17) zwischen dem Aktuatorflansch (15) und dem Verdichterflansch (16) oder zwischen einem Boden des Aufnahmebereichs (18) und dem Aktuatorgehäuse (14) eingeklemmt ist.

8. Verdichter nach einem der Ansprüche 1 bis 7,
**dadurch gekennzeichnet,**
- **dass** die Dichtung (17) eine Ringdichtung ist, die in einer ringförmigen Nut des Aktuatorgehäuses (14) aufgenommen ist, oder
- **dass** die Dichtung (17) eine Ringdichtung ist, die in einer ringförmigen Nut oder einer ringförmigen Fase des Verdichtergehäuses (2) aufgenommen ist.

9. Verdichter nach einem der Ansprüche 1 bis 8,
**dadurch gekennzeichnet,**
- **dass** eine Lagerstelle der Wirkstange (12) in dem Verdichtergehäuse (2) angeordnet ist, und/oder
- **dass** eine Lagerstelle der Wirkstange (12) und der Aktuator (8) um seine Längsmittelachse umlaufend und axial zumindest bereichsweise in dem Verdichtergehäuse (2) aufgenommen sind.

10. Verdichter nach einem der Ansprüche 1 bis 9,
**dadurch gekennzeichnet,**
- **dass** der Aktuator (8) ein linearer Steller (8a) ist und die Wirkstange (12) entlang der Längsmittelachse des Aktuators (8) translatorisch bewegbar ist, und
- **dass** die Wirkstange (12) tangential zu der Verstelleinheit (7) und quer zur Strömungsrichtung (SR) ausgerichtet ist und über eine Koppelstange (13) der Verstellvorrichtung (6) mit der Verstelleinheit (7) zusammenwirkt.

11. Verdichter nach einem der Ansprüche 1 bis 9,
**dadurch gekennzeichnet,**
- **dass** der Aktuator (8) ein rotatorischer Steller (8b) ist und die Wirkstange (12) mittels des Stellers (8b) drehbar ist, und
- **dass** die Wirkstange (12) quer zur Strömungsrichtung (SR) ausgerichtet ist und über eine Koppelstange (13) der Verstellvorrichtung (6) mit der Verstelleinheit (7) zusammenwirkt.

12. Verdichter nach Anspruch 10 oder 11,
**dadurch gekennzeichnet,**
**dass** die Wirkstange (12) und die Koppelstange (13) unter einem Winkel gleich 90° zueinander ausgerichtet sind.

13. Verdichter nach einem der Ansprüche 1 bis 12,
**dadurch gekennzeichnet,**
**dass** die Dichtung (17) eine radiale oder axiale Ringdichtung oder eine Flachdichtung ist.
